# NEUE EUROPÄISCHE PATENTSCHRIFT

(11) **EP 3 008 859 B2**
(45) Veröffentlichungstag und Bekanntmachung des Hinweises auf die Entscheidung über den Einspruch: **15.01.2020**
(45) Hinweis auf die Patenterteilung: 22.02.2017
(21) Anmeldenummer: 15713768.8
(22) Anmeldetag: 02.04.2015
(51) Int. Cl.: H04L 12/40

(54) **NETZWERKTEILNEHMER**
NETWORK SUBSCRIBER
ABONNÉ D'UN RÉSEAU

(30) Priorität: 29.04.2014 DE 102014106019
(43) Veröffentlichungstag der Anmeldung: 20.04.2016
(73) Patentinhaber: Beckhoff Automation GmbH, 33415 Verl (DE)
(72) Erfinder: BUNTE, Thorsten, 33335 Gütersloh (DE); BÜTTNER, Holger, 12157 Berlin (DE); VONNAHME, Erik, 33154 Salzkotten (DE); JANSSEN, Dirk, 33415 Verl (DE); RETTIG, Thomas, 33378 Rheda-Wiedenbrück (DE); BECKHOFF, Hans, 33415 Verl (DE)
(74) Vertreter: Patentanwaltskanzlei WILHELM & BECK
(86) Internationale Anmeldenummer: PCT/EP2015/057334
(87) Internationale Veröffentlichungsnummer: WO 2015/165688

(56) Entgegenhaltungen:
- WO-A1-2010/104930
- GB-A- 2 473 142
- US-A1- 2008 072 098
- US-A1- 2009 049 207

## Beschreibung

Die vorliegende Erfindung betrifft einen Netzwerkteilnehmer. Ein Netzwerkteilnehmer mit den Merkmalen des ersten Teils des Anspruchs 1 ist aus der GB 2473142 A bekannt.

Datennetzwerke sind aus dem Stand der Technik bekannt. Kabelgebundene Datennetzwerke nach dem Stand der Technik basieren häufig auf dem Ethernet-Standard. Unter dem Oberbegriff "Industrial Ethernet" ist es im Stand der Technik außerdem bekannt, Ethernet-Datennetzwerke zur Vernetzung von Geräten in der industriellen Fertigung und der Automatisierungstechnik zu nutzen. Solche Datennetzwerke können beispielsweise auf dem EtherCAT-Standard gemäß IEC-Norm "IEC 61158" basieren.

Datennetzwerke bestehen aus einer Mehrzahl vernetzter Netzwerkteilnehmer. Die Netzwerkteilnehmer können dabei beispielsweise in einer Ring-Topologie oder einer Linien-Topologie angeordnet sein. In solchen Datennetzwerken werden Datenpakete durch alle Netzwerkteilnehmer des Datennetzwerks geleitet. Ein vollständiger Umlaufzyklus eines Datenpakets über alle Netzwerkteilnehmer des Datennetzwerks nimmt eine Zykluszeit in Anspruch. Einen wesentlichen Anteil an dieser Zykluszeit haben die für die Durchleitung eines Datenpakets durch die einzelnen Netzwerkteilnehmer benötigten Durchlaufzeiten. Diese Durchlaufzeiten tragen wesentlich zur Begrenzung minimal erreichbarer Zykluszeiten bei.

Eine Aufgabe der vorliegenden Erfindung besteht darin, einen verbesserten Netzwerkteilnehmer bereitzustellen. Diese Aufgabe wird durch einen Netzwerkteilnehmer mit den Merkmalen des Anspruchs 1 gelöst. In den abhängigen Ansprüchen sind verschiedene Weiterbildungen angegeben.

Ein Netzwerkteilnehmer weist eine Mehrzahl individueller Funktionseinheiten, eine Anzahl gemeinsamer Funktionseinheiten, eine erste Schnittstelle zur Umsetzung einer physikalischen Verbindung und eine zweite Schnittstelle zur Umsetzung einer physikalischen Verbindung auf. Dabei umfasst jede individuelle Funktionseinheit eine Anwendungsschnittstelle. Über die Anwendungsschnittstellen der individuellen Funktionseinheiten dieses Netzwerkteilnehmers können anwendungsspezifische Steuergeräte, Mikrocontroller oder andere Geräte angeschlossen werden. Da der Netzwerkteilnehmer eine Mehrzahl individueller Funktionseinheiten mit jeweils einer Anwendungsschnittstelle aufweist, kann der Netzwerkteilnehmer in einem Netzwerk eine Mehrzahl herkömmlicher Netzwerkteilnehmer mit nur einer Anwendungsschnittstelle ersetzen. Da der Netzwerkteilnehmer dabei nur eine erste Schnittstelle zur Umsetzung einer physikalischen Verbindung und nur eine zweite Schnittstelle zur Umsetzung einer physikalischen Verbindung aufweist, fallen durch die physikalischen Verbindungen bewirkte Anteile einer für die Durchleitung eines Datenpakets durch den Netzwerkteilnehmer erforderlichen Durchlaufzeit bei dem Netzwerkteilnehmer vorteilhafterweise nur jeweils einmal pro erster und zweiter Schnittstelle an. Dadurch kann eine für eine Durchleitung eines Datenpakets durch den Netzwerkteilnehmer erforderliche Durchlaufzeit bei dem Netzwerkteilnehmer erheblich geringer sein als die Summe der Durchlaufzeiten für die Durchleitung eines Datenpakets durch eine entsprechende Anzahl herkömmlicher Netzwerkteilnehmer.

In einer Ausführungsform des Netzwerkteilnehmers sind die gemeinsamen Funktionseinheiten durch alle individuellen Funktionseinheiten nutzbar. Vorteilhafterweise müssen die gemeinsamen Funktionseinheiten des Netzwerkteilnehmers dadurch nicht mehrfach vorhanden sein. Dadurch reduziert sich der für die gemeinsamen Funktionseinheiten erforderliche Platzbedarf. Falls die gemeinsamen Funktionseinheiten in einem Asic realisiert sind, so können sich beispielsweise die benötigten Asic-Ressourcen reduzieren. Hierdurch reduzieren sich vorteilhafterweise auch die Herstellungskosten des Netzwerkteilnehmers.

In einer Ausführungsform des Netzwerkteilnehmers umfassen die gemeinsamen Funktionseinheiten eine Chip-Schnittstelle zu einem nichtflüchtigen Datenspeicher und/oder erste Teile einer Einheit zur Verwaltung eines verteilten Zeitsignals und/oder mindestens eine Leuchtdiode und/oder eine Takterzeugungseinheit und/oder eine Erzeugungseinheit für ein Rücksetzsignal (Reset-Signal). Die Chip-Schnittstelle zu einem nichtflüchtigen Datenspeicher kann beispielsweise eine I2C-Schnittstelle zu einem EEPROM sein. Die ersten Teile einer Einheit zur Verwaltung eines verteilten Zeitsignals können beispielsweise einen Systemzeit-Geber und/oder einen Empfangszeit-Geber umfassen. Die mindestens eine Leuchtdiode kann beispielsweise eine Leuchtdiode zur Signalisierung eines Betriebszustands oder einer Aktivität sein. Die Takterzeugungseinheit kann beispielsweise zur Erzeugung eines intern genutzten Taktsignals dienen. Die Erzeugungseinheit für ein Rücksetzsignal kann beispielsweise zur Überwachung einer Betriebsspannung dienen und externe und interne Rücksetzsignale verwalten. Vorteilhafterweise müssen diese gemeinsamen Funktionseinheiten des Netzwerkteilnehmers bei dem Netzwerkteilnehmer nur einfach vorhanden sein, wodurch der Netzwerkteilnehmer kompakter und kostengünstiger ausgebildet werden kann als eine entsprechende Anzahl herkömmlicher Netzwerkteilnehmer mit nur jeweils einer Anwendungsschnittstelle.

In einer Ausführungsform des Netzwerkteilnehmers umfassen die gemeinsamen Funktionseinheiten eine Paket-Verarbeitungseinheit. Vorteilhafterweise ist es dadurch nicht erforderlich, für jede individuelle Funktionseinheit und jede Anwendungsschnittstelle eine eigene Paket-Verarbeitungseinheit vorzusehen. Dadurch kann der Netzwerkteilnehmer vorteilhafterweise platzsparend und kostengünstig ausgebildet werden.

In einer Ausführungsform des Netzwerkteilnehmers ist die Paket-Verarbeitungseinheit ausgebildet, Paketbestandteile eines durch den Netzwerkteilnehmer empfangenen Pakets zu erkennen und/oder eine Prüfsumme zu prüfen und/oder eine Prüfsumme zu erzeugen. Vorteilhafterweise sind diese Aufgaben der Paket-Verarbeitungseinheit für jede individuelle Funktionseinheit des Netzwerkteilnehmers gleichermaßen durchzuführen, wodurch es ermöglicht wird, die Paket-Verarbeitungseinheit als gemeinsame Funktionseinheit des Netzwerkteilnehmers auszubilden.

In einer Ausführungsform des Netzwerkteilnehmers umfasst jede individuelle Funktionseinheit eine Speicherverwaltungseinheit. Die Speicherverwaltungseinheit kann auch als Fieldbus-Memory-Management-Unit (FMMU) bezeichnet werden. Die Speicherverwaltungseinheit jeder individuellen Funktionseinheit kann beispielsweise dazu dienen, logische Adressen bitweise auf physikalische Adressen abzubilden.

In einer Ausführungsform des Netzwerkteilnehmers umfasst jede individuelle Funktionseinheit eine Kerneinheit. In der Kerneinheit können Komponenten der jeweiligen individuellen Funktionseinheit gebündelt sein, die bei jeder individuellen Funktionseinheit gesondert vorgesehen sein müssen.

In einer Ausführungsform des Netzwerkteilnehmers umfasst jede Kerneinheit einen Registersatz und/oder einen flüchtigen Datenspeicher und/oder einen SyncManager und/oder zweite Teile einer Einheit zur Verwaltung eines verteilten Zeitsignals. Der Registersatz kann dabei beispielsweise zur Konfiguration von Komponenten der jeweiligen individuellen Funktionseinheit und des Netzwerkteilnehmers dienen. Der flüchtige Datenspeicher kann beispielsweise als Prozessspeicher dienen. Der SyncManager kann beispielsweise zur Verwaltung eines Datenaustauschs zwischen einem mit dem Netzwerkteilnehmer verbundenen Master-Netzwerkteilnehmer und einem über die Anwendungsschnittstelle der jeweiligen individuellen Funktionseinheit des Netzwerkteilnehmers verbundenen Gerät dienen. Die zweiten Teile der Einheit zur Verwaltung eines verteilten Zeitsignals können beispielsweise eine Sync-Signal- und/oder eine Latch-Signal-Einheit umfassen. Die Sync-Signal-Einheit kann beispielsweise zur Erzeugung synchroner Ausgangssignale dienen. Die Latch-Signal-Einheit kann beispielsweise dazu dienen, Eingangsereignisse mit einem präzisen Zeitstempel zu versehen.

In einer Ausführungsform des Netzwerkteilnehmers weist die Kerneinheit einer ersten individuellen Funktionseinheit des Netzwerkteilnehmers Register zur Ansteuerung der ersten Schnittstelle auf. Alternativ oder zusätzlich weist die Kerneinheit einer zweiten individuellen Funktionseinheit des Netzwerkteilnehmers Register zur Ansteuerung der zweiten Schnittstelle auf. Da der Netzwerkteilnehmer lediglich über die erste Schnittstelle zur Umsetzung einer physikalischen Verbindung und die zweite Schnittstelle zur Umsetzung einer physikalischen Verbindung verfügt, müssen auch lediglich zwei der individuellen Funktionseinheiten des Netzwerkteilnehmers Register zur Ansteuerung der Schnittstellen aufweisen. Dadurch können die übrigen individuellen Funktionseinheiten des Netzwerkteilnehmers vorteilhafterweise besonders einfach ausgebildet sein.

In einer Ausführungsform des Netzwerkteilnehmers weist dieser eine Management-Schnittstelle zur Verwaltung der ersten Schnittstelle und/oder der zweiten Schnittstelle auf. Die Management-Schnittstelle kann beispielsweise dazu dienen, die erste Schnittstelle zur Umsetzung einer physikalischen Verbindung und/oder die zweite Schnittstelle zur Umsetzung einer physikalischen Verbindung zu konfigurieren.

In einer Ausführungsform des Netzwerkteilnehmers ist die Management-Schnittstelle nur durch eine erste individuelle Funktionseinheit und/oder eine zweite individuelle Funktionseinheit ansprechbar. Da der Netzwerkteilnehmer lediglich über die erste Schnittstelle zur Umsetzung einer physikalischen Verbindung und die zweite Schnittstelle zur Umsetzung einer physikalischen Verbindung verfügt, muss die Management-Schnittstelle auch nur durch zwei der individuellen Funktionseinheiten des Netzwerkteilnehmers ansprechbar sein. Dadurch können die übrigen individuellen Funktionseinheiten des Netzwerkteilnehmers vorteilhafterweise besonders einfach ausgebildet sein.

In einer Ausführungsform des Netzwerkteilnehmers weist die erste Schnittstelle eine erste FIFO-Warteschlange auf. Alternativ oder zusätzlich weist die zweite Schnittstelle eine zweite FIFO-Warteschlange auf. Die FIFO-Warteschlangen können beispielsweise dazu dienen, durch den Netzwerkteilnehmer gesendete oder empfangene Daten kurzzeitig zwischenzuspeichern. Vorteilhafterweise müssen bei dem Netzwerkteilnehmer nicht für jede individuelle Funktionseinheit eigene FIFO-Warteschlangen vorgesehen werden.

In einer Ausführungsform des Netzwerkteilnehmers sind die erste Schnittstelle und die zweite Schnittstelle als Ethernet-Schnittstellen ausgebildet. Vorteilhafterweise kann der Netzwerkteilnehmer dann in einem Ethernet-Netzwerk eingesetzt werden.

In einer Ausführungsform des Netzwerkteilnehmers ist dieser als EtherCAT-Teilnehmer ausgebildet. Vorteilhafterweise kann der Netzwerkteilnehmer dann in einem EtherCAT-Netzwerk eingesetzt werden.

In einer Ausführungsform des Netzwerkteilnehmers umfasst dieser mindestens 8, bevorzugt mindestens 16, individuelle Funktionseinheiten. Vorteilhafterweise kann der Netzwerkteilnehmer dadurch mindestens 8 bzw. mindestens 16 herkömmliche Netzwerkteilnehmer mit nur jeweils einer Anwendungsschnittstelle ersetzen. Dabei reduziert sich eine für eine Durchleitung eines Datenpakets durch den Netzwerkteilnehmer benötigte Durchlaufzeit gegenüber der Summe der zur Durchleitung eines Datenpakets durch 8 oder 16 herkömmliche Netzwerkteilnehmer mit nur jeweils einer Anwendungsschnittstelle benötigten Durchlaufzeiten erheblich.

In einer Ausführungsform des Netzwerkteilnehmers sind die Anwendungsschnittstellen der individuellen Funktionseinheiten zum Anschluss von EtherCAT-Application-Controllern ausgebildet. Die Anwendungsschnittstellen können beispielsweise als SPI-Schnittstellen (Serial Peripheral Interface) ausgebildet sein.

In einer Ausführungsform des Netzwerkteilnehmers weist dieser mindestens eine weitere Schnittstelle zur Umsetzung einer physikalischen Verbindung auf. Dies ermöglicht es, den Netzwerkteilnehmer mit mehr als zwei benachbarten Netzwerkteilnehmern direkt zu verbinden. Dadurch kann der Netzwerkteilnehmer vorteilhafterweise einen Verzweigungspunkt in einem Netzwerk bilden. Beispielsweise kann der Netzwerkteilnehmer einen Knotenpunkt in einem Netzwerk mit Baum- oder Sterntopologie bilden.

Die Erfindung wird nachfolgend anhand von Figuren näher erläutert. Dabei zeigen in jeweils schematisierter Darstellung
Fig. 1 ein erstes Netzwerk mit einer Mehrzahl von Netzwerkteilnehmern;
Fig. 2 ein zweites Netzwerk mit einem Netzwerkteilnehmer mit einer Mehrzahl individueller Funktionseinheiten; und
Fig. 3 eine detailliertere Darstellung des Netzwerkteilnehmers mit der Mehrzahl individueller Funktionseinheiten.

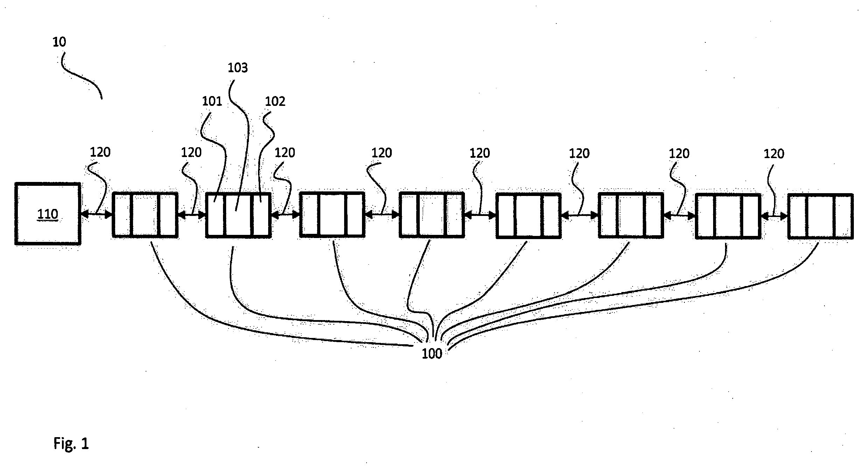

Fig. 1 zeigt eine schematische Darstellung eines aus dem Stand der Technik bekannten ersten Netzwerks 10. Das erste Netzwerk 10 ist ein Datennetzwerk, das zur Übertragung von Daten zwischen Netzwerkteilnehmern des ersten Netzwerks 10 dient. Das erste Netzwerk 10 kann ein drahtloses Netzwerk oder ein kabelgebundenes Netzwerk sein. Das erste Netzwerk 10 kann beispielsweise ein auf dem Ethernet-Standard basierendes Netzwerk sein. Das erste Netzwerk 10 kann zur Vernetzung von Geräten in der industriellen Fertigung und/oder für Kontroll- oder Automatisierungszwecke dienen. Das erste Netzwerk 10 kann beispielsweise ein Netzwerk nach dem EtherCAT-Standard sein.

Das erste Netzwerk 10 umfasst eine Mehrzahl von Slave-Netzwerkteilnehmern 100 und einen Master-Netzwerkteilnehmer 110. Die Netzwerkteilnehmer 100, 110 des ersten Netzwerks 10 sind über Verbindungen 120 miteinander verbunden.

Im dargestellten Beispiel weist das erste Netzwerk 10 eine Linien-Topologie auf. Die Linien-Topologie des ersten Netzwerks 10 kann auch als geöffnete Ring-Topologie verstanden werden. Die Verbindungen 120 zwischen den Netzwerkteilnehmern 100, 110 des ersten Netzwerks 10 sind als Einpunktverbindungen und Zweipunktverbindungen ausgebildet. Der Master-Netzwerkteilnehmer 110 des ersten Netzwerks 10 ist über eine Verbindung 120 mit einem der Slave-Netzwerkteilnehmer 100 verbunden. Die Slave-Netzwerkteilnehmer 100 sind in einer Kette hintereinander angeordnet, sodass jeder Slave-Netzwerkteilnehmer 100, bis auf den ersten Slave-Netzwerkteilnehmer 100 und den letzten Slave-Netzwerkteilnehmer 100 der Kette, jeder Slave-Netzwerkteilnehmer 100 Verbindungen 120 zu zwei benachbarten Slave-Netzwerkteilnehmern 100 aufweist. Es wäre allerdings auch möglich, das erste Netzwerk 10 mit einer anderen Topologie auszubilden, beispielsweise mit einer Stern-Topologie, einer Baum-Topologie oder einer gemischten Topologie.

Falls es sich bei dem ersten Netzwerk 10 um ein EtherCAT-Netzwerk handelt, so kann es sich bei den Slave-Netzwerkteilnehmern 100 des ersten Netzwerks 10 um EtherCAT-Slave-Controller (ESC) handeln. Die Slave-Netzwerkteilnehmer 100 können als Schnittstelle zu Slave-Anwendungsgeräten dienen. Beispielsweise können die Slave-Netzwerkteilnehmer 100 zum Anschluss von EtherCAT-Application-Controllern ausgebildet sein.

Der Master-Netzwerkteilnehmer 110 des ersten Netzwerks 10 kann dazu ausgebildet sein, Steuerungs- und Führungsaufgaben innerhalb des ersten Netzwerks 10 zu übernehmen. Beispielsweise kann der Master-Netzwerkteilnehmer 110 dazu ausgebildet sein, die Slave-Netzwerkteilnehmer 100 des ersten Netzwerks 10 zu konfigurieren und eine Datenkommunikation innerhalb des ersten Netzwerks 10 zu koordinieren.

Jeder der Slave-Netzwerkteilnehmer 100 des ersten Netzwerks 10 weist eine erste Schnittstelle 101 zur Umsetzung einer physikalischen Verbindung und eine zweite Schnittstelle 102 zur Umsetzung einer physikalischen Verbindung auf. Die erste Schnittstelle 101 und die zweite Schnittstelle 102 dienen zur Umsetzung der Verbindungen 120. Die erste Schnittstelle 101 und die zweite Schnittstelle 102 können beispielsweise als Ethernet-Schnittstellen ausgebildet sein. Die erste Schnittstelle 101 und die zweite Schnittstelle 102 können auch als PHYs bezeichnet werden oder PHYs umfassen.

Außerdem umfasst jeder Slave-Netzwerkteilnehmer 100 des ersten Netzwerks 10 eine Verarbeitungseinheit 103. Falls es sich bei den Slave-Netzwerkteilnehmern 100 um EtherCAT-Netzwerkteilnehmer handelt, so kann die Verarbeitungseinheit 103 auch als EtherCAT-Processing-Unit (EPU) bezeichnet werden. Die Verarbeitungseinheit 103 jedes Slave-Netzwerkteilnehmers 100 dient zur Analyse und Verarbeitung von über die erste Schnittstelle 101 und/oder die zweite Schnittstelle 102 empfangenen Datenpaketen. Dabei handhabt die Verarbeitungseinheit 103 insbesondere auch einen Datenaustausch mit einem an den jeweiligen Slave-Netzwerkteilnehmer 100 angeschlossenen Slave-Anwendungsgerät.

Im ersten Netzwerk 10 werden Datenpakete durch den Master-Netzwerkteilnehmer 110 ausgesendet und entlang der Kette der Slave-Netzwerkteilnehmer 100 über die Verbindungen 120 bis zum letzten Slave-Netzwerkteilnehmer 100 der Kette von Slave-Netzwerkteilnehmern 100 des ersten Netzwerks 10 weitergeleitet, bevor sie von diesem Slave-Netzwerkteilnehmer 100 über die Kette der Slave-Netzwerkteilnehmer 100 des ersten Netzwerks 10 zu dem Master-Netzwerkteilnehmer 110 des ersten Netzwerks 10 zurückgeschickt werden.

Dabei wird jedes Datenpaket auf dem Hinweg beim Durchlauf durch einen Slave-Netzwerkteilnehmer 100 über die erste Schnittstelle 101 zur Umsetzung einer physikalischen Verbindung empfangen, durch die Verarbeitungseinheit 103 des jeweiligen Slave-Netzwerkteilnehmers 100 verarbeitet und über die zweite Schnittstelle 102 zur Umsetzung einer physikalischen Verbindung an den nachfolgenden Slave-Netzwerkteilnehmer 100 weitergeleitet. Auf dem Rückweg des Datenpakets erfolgt die Bearbeitung entsprechend in umgekehrter Reihenfolge.

Die Durchlaufzeit des Datenpakets durch einen Slave-Netzwerkteilnehmer 100 kann dabei beispielsweise pro Durchleitungsrichtung ca. 500 ns, für die Hin- und Rückleitung eines Datenpakets in der Summe somit ca. 1 µs betragen. Hierdurch ergibt sich für den Umlauf eines Datenpakets über alle Slave-Netzwerkteilnehmer 100 des ersten Netzwerks 10 eine erhebliche Zykluszeit. Durch den Anteil der Durchlaufzeiten durch die Slave-Netzwerkteilnehmer 100 an der gesamten Zykluszeit eines Datenpakets in dem ersten Netzwerk 10 wird eine minimal erreichbare Zykluszeit in dem ersten Netzwerk 10 begrenzt.

Ein erheblicher Anteil der für die Durchleitung eines Datenpakets durch einen Slave-Netzwerkteilnehmer 100 erforderlichen Durchlaufzeit kann in der ersten Schnittstelle 101 zur Umsetzung einer physikalischen Verbindung und der zweiten Schnittstelle 102 zur Umsetzung einer physikalischen Verbindung anfallen. Beispielsweise kann in der ersten Schnittstelle 101 und der zweiten Schnittstelle 102 pro Durchleitungsrichtung jeweils ein Anteil der Durchlaufzeit von etwa 250 ns anfallen.

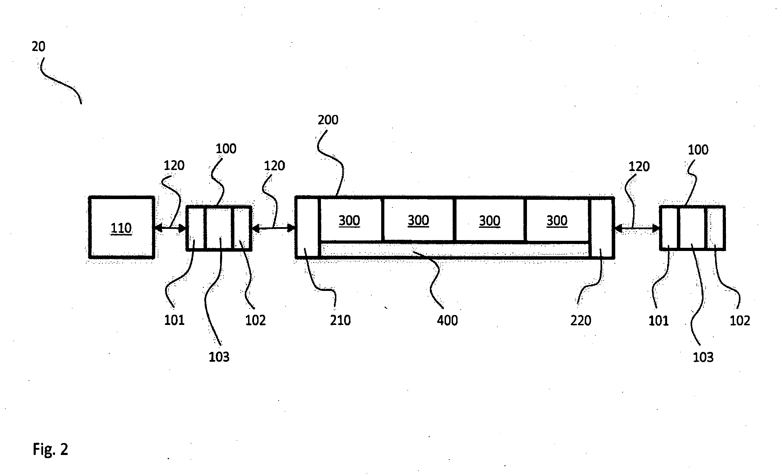

Fig. 2 zeigt eine schematische Darstellung eines zweiten Netzwerks 20. Das zweite Netzwerk 20 ist ebenfalls ein Datennetzwerk, das zur Übertragung von Daten zwischen Netzwerkteilnehmern des zweiten Netzwerks 20 dient. Auch bei dem zweiten Netzwerk 20 kann es sich um ein drahtloses Netzwerk oder um ein kabelgebundenes Netzwerk handeln. Das zweite Netzwerk 20 kann beispielsweise ein auf dem Ethernet-Standard basierendes Netzwerk sein. Insbesondere kann das zweite Netzwerk ein Netzwerk nach dem EtherCAT-Standard sein und zur Vernetzung von Geräten in der industriellen Fertigung und/oder für Kontroll- oder Automatisierungszwecke dienen.

Das zweite Netzwerk 20 weist wiederum einen Master-Netzwerkteilnehmer 110 auf, der wie der Master-Netzwerkteilnehmer 110 des ersten Netzwerks 10 ausgebildet ist. Außerdem weist das zweite Netzwerk 20 im dargestellten Beispiel zwei Slave-Netzwerkteilnehmer 100 auf, die wie die Slave-Netzwerkteilnehmer 100 des ersten Netzwerks 10 ausgebildet sind. Zusätzlich weist das zweite Netzwerk 20 einen erfindungsgemäß ausgebildeten Netzwerkteilnehmer 200 auf. Der Master-Netzwerkteilnehmer 110, die Slave-Netzwerkteilnehmer 100 und der Netzwerkteilnehmer 200 sind beispielhaft in einer Linien-Topologie hintereinander angeordnet und über Verbindungen 120 miteinander verbunden. Dabei ist der Netzwerkteilnehmer 200 zwischen den beiden Slave-Netzwerkteilnehmern 100 angeordnet. Die Anzahl der Netzwerkteilnehmer 100, 200 und die dargestellte Topologie des zweiten Netzwerks 20 sind jedoch lediglich beispielhaft und könnten auch anders gewählt sein.

Der Netzwerkteilnehmer 200 des zweiten Netzwerks 20 dient erfindungsgemäß als Ersatz für eine Mehrzahl von Slave-Netzwerkteilnehmern 100. Mehrere Slave-Anwendungsgeräte können an den Netzwerkteilnehmer 200 angeschlossen werden. Falls es sich bei dem zweiten Netzwerk 20 um ein EtherCAT-Netzwerk handelt, so kann der Netzwerkteilnehmer 200 beispielsweise zum Anschluss von mehreren EtherCAT-Application-Controllern ausgebildet sein.

Der Netzwerkteilnehmer 200 weist mehrere individuelle Funktionseinheiten 300 auf. Im in Fig. 2 dargestellten Beispiel weist der Netzwerkteilnehmer 200 vier individuelle Funktionseinheiten 300 auf. Es ist jedoch auch möglich, den Netzwerkteilnehmer 200 mit einer anderen Zahl individueller Funktionseinheiten 300 auszustatten. Bevorzugt weist der Netzwerkteilnehmer 200 eine höhere Zahl individueller Funktionseinheiten 300 auf, beispielsweise 8 oder 16 individuelle Funktionseinheiten 300.

Jede individuelle Funktionseinheit 300 des Netzwerkteilnehmers 200 dient als Schnittstelle zu einem Slave-Anwendungsgerät, beispielsweise zu einem EtherCAT-Application-Controller. Im in Fig. 2 dargestellten Beispiel eignet sich der Netzwerkteilnehmer 200 somit zum Anschluss von vier Slave-Anwendungsgeräten, beispielsweise zum Anschluss von vier EtherCAT-Application-Controllern.

Neben den individuellen Funktionseinheiten 300 umfasst der Netzwerkteilnehmer 200 gemeinsame Funktionseinheiten 400. Die gemeinsamen Funktionseinheiten 400 sind jeweils durch mehrere oder alle individuellen Funktionseinheiten 300 des Netzwerkteilnehmers 200 nutzbar. Die individuellen Funktionseinheiten 300 des Netzwerkteilnehmers 200 teilen sich die gemeinsamen Funktionseinheiten 400 somit. Dadurch, dass die gemeinsamen Funktionseinheiten 400 bei dem Netzwerkteilnehmer 200 insgesamt nur einfach und nicht einmal pro individueller Funktionseinheit 300 vorhanden sind, kann der Netzwerkteilnehmer 200 vorteilhafterweise besonders kompakt und kostengünstig ausgebildet sein.

Ferner weist der Netzwerkteilnehmer 200 eine erste Schnittstelle 210 zur Umsetzung einer physikalischen Verbindung und eine zweite Schnittstelle 220 zur Umsetzung einer physikalischen Verbindung auf. Die Schnittstellen 210, 220 des Netzwerkteilnehmers 200 dienen zur Umsetzung der Verbindungen 120 zu den benachbarten Netzwerkteilnehmern des zweiten Netzwerks 20. Der Netzwerkteilnehmer 200 kann noch weitere Schnittstellen zur Umsetzung einer physikalischen Verbindung aufweisen, die zur Umsetzung weiterer Verbindungen 120 zu weiteren benachbarten Netzwerkteilnehmern des zweiten Netzwerks 20 dienen.

Bei dem Netzwerkteilnehmer 200 ist lediglich ein gemeinsamer Satz von Schnittstellen 210, 220 zur Umsetzung einer physikalischen Verbindung vorhanden, nicht jeweils ein eigener Satz von Schnittstellen pro individueller Funktionseinheit 300. Auch dies trägt dazu bei, den Netzwerkteilnehmer 200 kompakt und kostengünstig ausbilden zu können. Außerdem trägt dies dazu bei, dass der in den Schnittstellen 210, 220 zur Umsetzung einer physikalischen Verbindung anfallende Anteil einer Durchlaufzeit zur Durchleitung eines Datenpakets durch den Netzwerkteilnehmer 200 bei dem Netzwerkteilnehmer 200 nur einmal pro Schnittstelle 210, 220 und Durchleitungsrichtung anfällt, nicht jeweils für jede individuelle Funktionseinheit 300 des Netzwerkteilnehmers 200 einzeln. Dadurch ergibt sich bei dem Netzwerkteilnehmer 200 insgesamt eine Durchlaufzeit, die wesentlich kürzer ist als die Summe der Durchlaufzeiten durch eine der Zahl der individuellen Funktionseinheiten 300 des Netzwerkteilnehmers 200 entsprechende Anzahl von Slave-Netzwerkteilnehmern 100.

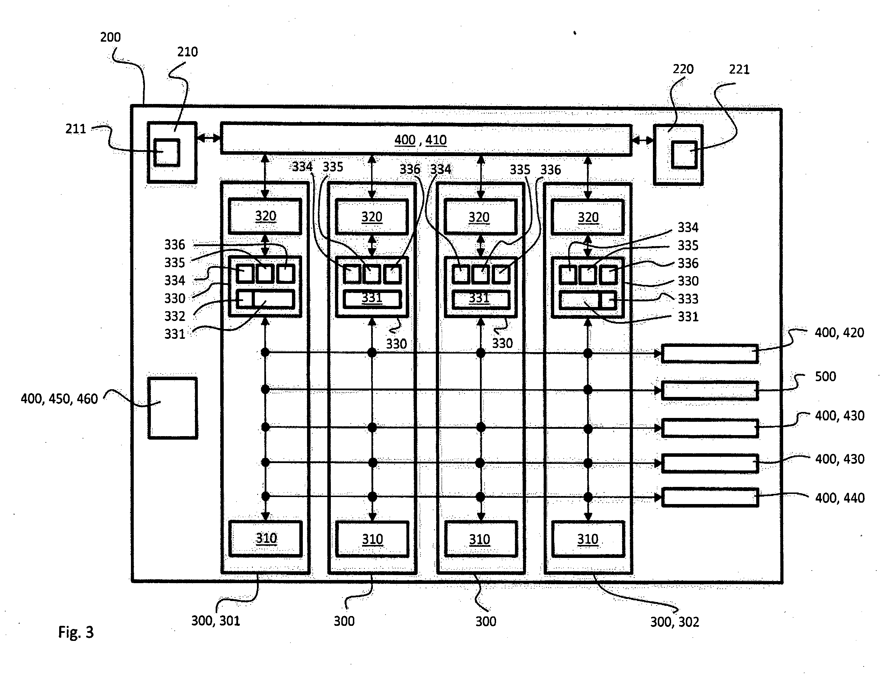

Fig. 3 zeigt eine schematische Darstellung des in Fig. 2 dargestellten Netzwerkteilnehmers 200 mit erhöhtem Detailgrad. Die dargestellte Zahl von vier individuellen Funktionseinheiten 300 des Netzwerkteilnehmers 200 ist wiederum lediglich beispielhaft. Der Netzwerkteilnehmer 200 kann eine andere Zahl individueller Funktionseinheiten 300 aufweisen, beispielsweise 8 oder 16 individuelle Funktionseinheiten 300.

Die erste Schnittstelle 210 zur Umsetzung einer physikalischen Verbindung des Netzwerkteilnehmers 200 umfasst eine erste FIFO-Warteschlange (First In - First Out) 211. Entsprechend umfasst die zweite Schnittstelle 220 zur Umsetzung einer physikalischen Verbindung des Netzwerkteilnehmers 200 eine zweite FIFO-Warteschlange 221. Die FIFO-Warteschlangen 211, 221 der Schnittstellen 210, 220 des Netzwerkteilnehmers 200 dienen zur Pufferung über die Schnittstellen 210, 220 des Netzwerkteilnehmers 200 gesendeter und empfangener Daten, um zwischen dem Übertragungstakt auf der Verbindung und dem internen Verarbeitungstakt zu synchronisieren. Da der Netzwerkteilnehmer 200 trotz der Mehrzahl individueller Funktionseinheiten 300 mit jeweils daran anschließbaren Slave-Anwendungsgeräten nur einen Satz Schnittstellen 210, 220 zur Umsetzung einer physikalischen Verbindung aufweist, weist der Netzwerkteilnehmer 200 auch nur einen Satz von FIFO-Warteschlangen 211, 221 auf. Dadurch fallen an den FIFO-Warteschlangen 211, 221 anfallende Anteile einer Durchlaufzeit bei der Durchleitung von Datenpaketen durch den Netzwerkteilnehmer 200 bei dem Netzwerkteilnehmer 200 nur jeweils einfach an.

Jede individuelle Funktionseinheit 300 weist eine Anwendungsschnittstelle 310 auf. Die Anwendungsschnittstelle 310 kann auch als Process-Data-Interface (PDI) oder als Application-Interface bezeichnet werden. Die Anwendungsschnittstelle 310 stellt die eigentliche Schnittstelle zum Anschließen eines Slave-Anwendungsgeräts an die jeweilige individuelle Funktionseinheit 300 des Netzwerkteilnehmers 200 bereit. Die Anwendungsschnittstelle 310 kann beispielsweise als digitale I/O-Schnittstelle, als SPI-Schnittstelle, als synchroner oder asynchroner Mikrocontroller mit 8 Bit oder 16 Bit, als On-Chip-Bus, als Mehrzweck-I/O-Schnittstelle oder als andere Schnittstelle ausgebildet sein.

Weiter kann jede individuelle Funktionseinheit 300 des Netzwerkteilnehmers 200 eine Speicherverwaltungseinheit 320 umfassen. Falls es sich bei dem Netzwerkteilnehmer 200 um einen EtherCAT-Netzwerkteilnehmer handelt, so kann die Speicherverwaltungseinheit 320 auch als Fieldbus-Memory-Management-Unit (FMMU) bezeichnet werden. Die Speicherverwaltungseinheit 320 dient dazu, logische Adressen bitweise auf physikalische Adressen der jeweiligen individuellen Funktionseinheit 300 abzubilden.

Ferner kann jede individuelle Funktionseinheit 300 eine Kerneinheit 330 aufweisen. Die Kerneinheit 330 kann auch als Core bezeichnet werden.

Jede Kerneinheit 330 kann einen Registersatz 331 aufweisen. Der Registersatz 331 kann beispielsweise Register zur Konfiguration der jeweiligen individuellen Funktionseinheit 300 und zur Konfiguration eines über die Anwendungsschnittstelle 310 der jeweiligen individuellen Funktionseinheit 300 angeschlossenen Slave-Anwendungsgeräts umfassen.

Der Registersatz 331 der Kerneinheit 330 einer ersten individuellen Funktionseinheit 301 der individuellen Funktionseinheiten 300 des Netzwerkteilnehmers 200 umfasst Register 332 zur Ansteuerung der ersten Schnittstelle 210 des Netzwerkteilnehmers 200. Diese Register 332 zur Ansteuerung der ersten Schnittstelle 210 des Netzwerkteilnehmers 200 sind nur im Registersatz 331 der Kerneinheit 330 der ersten individuellen Funktionseinheit 301 vorhanden, nicht in den Registersätzen 331 der Kerneinheiten 330 der übrigen individuellen Funktionseinheiten 300.

Der Registersatz 331 der Kerneinheit 330 einer zweiten individuellen Funktionseinheit 302 der individuellen Funktionseinheiten 300 des Netzwerkteilnehmers 200 umfasst Register 333 zur Ansteuerung der zweiten Schnittstelle 220 des Netzwerkteilnehmers 200. Solche Register 333 zur Ansteuerung der zweiten Schnittstelle 220 des Netzwerkteilnehmers 200 werden bei den übrigen individuellen Funktionseinheiten 300 des Netzwerkteilnehmers 200 nicht benötigt und müssen daher bei den übrigen individuellen Funktionseinheiten 300 außer der zweiten individuellen Funktionseinheit 302 nicht vorhanden sein.

In einer alternativen Ausgestaltung weist der Registersatz 331 der Kerneinheit 330 der ersten individuellen Funktionseinheit 301 der individuellen Funktionseinheiten 300 des Netzwerkteilnehmers 200 auch die Register 333 zur Ansteuerung der zweiten Schnittstelle 220 des Netzwerkteilnehmers 200 auf. Die zweite individuelle Funktionseinheit 302 ist dann ausgebildet wie die übrigen individuellen Funktionseinheiten 300.

Ferner kann die Kerneinheit 330 jeder individuellen Funktionseinheit 300 des Netzwerkteilnehmers 200 einen flüchtigen Datenspeicher (RAM) 334 umfassen. Der flüchtige Datenspeicher 334 kann beispielsweise eine Größe von 64 Kbyte aufweisen. Ein erster Teil des flüchtigen Datenspeichers 334 kann den Registersatz 331 der jeweiligen Kerneinheit 330 bilden. Ein weiterer Teil des flüchtigen Datenspeichers 334 kann als Prozessspeicher dienen. Die Speicherverwaltungseinheit 320 jeder individuellen Funktionseinheit 300 kann dazu dienen, logische Adressen bitweise auf physikalische Adressen des flüchtigen Datenspeichers 334 der Kerneinheit 330 der jeweiligen individuellen Funktionseinheit 300 abzubilden.

Ferner kann die Kerneinheit 330 jeder individuellen Funktionseinheit 300 einen SyncManager 335 umfassen. Der SyncManager 335 kann dazu dienen, einen Datenaustausch zwischen dem Master-Netzwerkteilnehmer 110 des zweiten Netzwerks 20 und dem über die Anwendungsschnittstelle 310 an die jeweilige individuelle Funktionseinheit 300 des Netzwerkteilnehmers 200 angeschlossenen Slave-Anwendungsgerät zu koordinieren.

Die gemeinsamen Funktionseinheiten 400 des Netzwerkteilnehmers 200 umfassen eine Paket-Verarbeitungseinheit 410. Die Paket-Verarbeitungseinheit 410 ist dazu vorgesehen, über die Schnittstellen 210, 220 zur Umsetzung einer physikalischen Verbindung des Netzwerkteilnehmers 200 empfangene Datenpakete zumindest teilweise zu verarbeiten oder vorzuverarbeiten. Beispielsweise kann die Paket-Verarbeitungseinheit 410 dazu ausgebildet sein, Paketbestandteile von über die Schnittstellen 210, 220 empfangenen Datenpaketen zu erkennen, Prüfsummen von über die Schnittstellen 210, 220 empfangenen Datenpaketen zu prüfen und/oder Prüfsummen von über die Schnittstellen 210, 220 empfangenen Datenpaketen zu erzeugen. Die Paket-Verarbeitungseinheit 410 führt diese Aufgaben zentral und lediglich einmal für alle individuellen Funktionseinheiten 300 des Netzwerkteilnehmers 200 durch.

Ferner dient die Paket-Verarbeitungseinheit 410 dazu, über die Schnittstellen 210, 220 des Netzwerkteilnehmers 200 empfangene Datenpakete an die individuellen Funktionseinheiten 300 des Netzwerkteilnehmers 200 weiterzuleiten und von den individuellen Funktionseinheiten 300 erzeugte und/oder veränderte Datenpakete über die Schnittstellen 210, 220 des Netzwerkteilnehmers 200 auszusenden.

Die gemeinsamen Funktionseinheiten 400 des Netzwerkteilnehmers 200 können eine Chip-Schnittstelle 420 zu einem nichtflüchtigen Datenspeicher umfassen. Die Chip-Schnittstelle 420 kann beispielsweise als I2C-Schnittstelle (Inter-Integrated Circuit) ausgebildet sein. Der nichtflüchtige Datenspeicher kann beispielsweise als EEPROM ausgebildet sein. Der nichtflüchtige Datenspeicher kann beispielsweise dazu dienen, Konfigurationsinformationen zur Konfiguration des Netzwerkteilnehmers 200 nichtflüchtig zu speichern.

Die gemeinsamen Funktionseinheiten 400 des Netzwerkteilnehmers 200 können ferner erste Teile 430 einer Einheit zur Verwaltung eines verteilten Zeitsignals umfassen. Das verteilte Zeitsignal kann ein Zeitsignal sein, das innerhalb des zweiten Netzwerks 20 zwischen allen Netzwerkteilnehmern 100, 110, 200 des zweiten Netzwerks 20 synchronisiert wird. Die ersten Teile 430 der Einheit zur Verwaltung des verteilten Zeitsignals können beispielsweise einen oder mehrere Zeitgeber umfassen, die eine Empfangszeit und/oder eine Systemzeit erzeugen.

Zusätzlich zu den gemeinsam genutzten ersten Teilen 430 der Einheit zur Verwaltung des verteilten Zeitsignals kann die Kerneinheit 330 jeder individuellen Funktionseinheit 300 zweite Teile 336 der Einheit zur Verwaltung des verteilten Zeitsignals umfassen. Die zweiten Teile 336 der Einheit zur Verwaltung des verteilten Zeitsignals sind somit individuell für jede individuelle Funktionseinheit 300 vorhanden. Die zweiten Teile 336 der Einheit zur Verwaltung des verteilten Zeitsignals können beispielsweise jeweils eine Sync-Signal-Einheit zur Erzeugung synchroner Ausgangssignale und/oder eine Latch-Signal-Einheit zum Versehen von Eingangsereignissen mit Zeitstempeln umfassen.

Die gemeinsamen Funktionseinheiten 400 des Netzwerkteilnehmers 200 können ferner eine oder mehrere Leuchtdioden 440 umfassen. Die Leuchtdioden 440 können dazu vorgesehen sein, Zustands- und Aktivitätsinformationen des Netzwerkteilnehmers 200 anzuzeigen.

Die gemeinsamen Funktionseinheiten 400 des Netzwerkteilnehmers 200 können außerdem eine Takterzeugungseinheit 450 umfassen. Die Takterzeugungseinheit 450 kann dazu dienen, ein durch den Netzwerkteilnehmer 200 genutztes Taktsignal zu erzeugen.

Ferner können die gemeinsamen Funktionseinheiten 400 des Netzwerkteilnehmers 200 eine Erzeugungseinheit 460 für ein Rücksetzsignal (Reset-Signal) umfassen. Die Erzeugungseinheit 460 für das Rücksetzsignal kann dazu dienen, eine Spannungsversorgung zu überwachen und externe und interne Rücksetzsignale zu verwalten.

Der Netzwerkteilnehmer 200 kann weiter eine Management-Schnittstelle 500 aufweisen. Die Management-Schnittstelle 500 kann zur Verwaltung der ersten Schnittstelle 210 zur Umsetzung einer physikalischen Verbindung und der zweiten Schnittstelle 220 zur Umsetzung einer physikalischen Verbindung dienen. Es ist ausreichend, wenn lediglich die erste individuelle Funktionseinheit 301 und/oder die zweite individuelle Funktionseinheit 302 die Management-Schnittstelle 500 ansprechen können.

### Bezugszeichenliste

- 10: erstes Netzwerk
- 20: zweites Netzwerk

- 100: Slave-Netzwerkteilnehmer
- 101: erste Schnittstelle zur Umsetzung einer physikalischen Verbindung
- 102: zweite Schnittstelle zur Umsetzung einer physikalischen Verbindung
- 103: Verarbeitungseinheit
- 110: Master-Netzwerkteilnehmer
- 120: Verbindung

- 200: Netzwerkteilnehmer
- 210: ersten Schnittstelle zur Umsetzung einer physikalischen Verbindung
- 211: erste FIFO-Warteschlange
- 220: zweite Schnittstelle zur Umsetzung einer physikalischen Verbindung
- 221: zweite FIFO-Warteschlange

- 300: individuelle Funktionseinheit
- 301: erste individuelle Funktionseinheit
- 302: zweite individuelle Funktionseinheit
- 310: Anwendungsschnittstelle
- 320: Speicherverwaltungseinheit
- 330: Kerneinheit
- 331: Registersatz
- 332: Register zur Ansteuerung der ersten Schnittstelle
- 333: Register zur Ansteuerung der zweiten Schnittstelle
- 334: flüchtiger Datenspeicher
- 335: SyncManager
- 336: zweite Teile einer Einheit zur Verwaltung eines verteilten Zeitsignals
- 400: gemeinsame Funktionseinheiten
- 410: Paket-Verarbeitungseinheit
- 420: Chip-Schnittstelle zu einem nichtflüchtigen Datenspeicher
- 430: erste Teile einer Einheit zur Verwaltung eines verteilten Zeitsignals
- 440: Leuchtdiode
- 450: Takterzeugungseinheit
- 460: Erzeugungseinheit für ein Rücksetzsignal

- 500: Management-Schnittstelle

## Patentansprüche

1. Netzwerkteilnehmer (200)
mit einer Mehrzahl individueller Funktionseinheiten (300),
einer Anzahl gemeinsamer Funktionseinheiten (400), einer ersten Schnittstelle (210) zur Umsetzung einer ersten physikalischen Verbindung zu benachbarten Netzwerkteilnehmern,
**dadurch gekennzeichnet, dass** jede der Mehrzahl individueller Funktionseinheiten (300) eine Anwendungsschnittstelle (310) umfasst, die die eigentliche Schnittstelle zum Anschließen eines Slave-Anwendungsgeräts an die jeweilige individuelle Funktionseinheit (300) bereitstellt, und eine zweite Schnittstelle (220) zur Umsetzung einer zweiten physikalischen Verbindung zu den benachbarten Netzwerkteilnehmern vorgesehen ist,
wobei ein in der ersten Schnittstelle (210) und in der zweiten Schnittstelle (220) zur Umsetzung einer physikalischen Verbindung anfallender Anteil einer Durchlaufzeit zur Durchleitung eines Datenpakets durch den Netzwerkteilnehmer (200) nur einmal pro erster Schnittstelle (210) und zweiter Schnittstelle (220) und Durchleitungsrichtung anfällt.

2. Netzwerkteilnehmer (200) gemäß Anspruch 1,
wobei die gemeinsamen Funktionseinheiten (400) durch alle individuellen Funktionseinheiten (300) nutzbar sind.

3. Netzwerkteilnehmer (200) gemäß einem der vorhergehenden Ansprüche,
wobei die gemeinsamen Funktionseinheiten (400) eine Chip-Schnittstelle (420) zu einem nichtflüchtigen Datenspeicher
und/oder erste Teile (430) einer Einheit zur Verwaltung eines verteilten Zeitsignals und/oder mindestens eine Leuchtdiode (440)
und/oder eine Takterzeugungseinheit (450)
und/oder eine Erzeugungseinheit (460) für ein Rücksetzsignal umfassen.

4. Netzwerkteilnehmer (200) gemäß einem der vorhergehenden Ansprüche,
wobei die gemeinsamen Funktionseinheiten (400) eine Paket-Verarbeitungseinheit (410) umfassen.

5. Netzwerkteilnehmer (200) gemäß Anspruch 4,
wobei die Paket-Verarbeitungseinheit (410) ausgebildet ist, Paketbestandteile eines durch den Netzwerkteilnehmer (200) empfangenen Pakets zu erkennen und/oder eine Prüfsumme zu prüfen und/oder eine Prüfsumme zu erzeugen.

6. Netzwerkteilnehmer (200) gemäß einem der vorhergehenden Ansprüche,
wobei jede individuelle Funktionseinheit (300) eine Speicherverwaltungseinheit (320) umfasst.

7. Netzwerkteilnehmer (200) gemäß einem der vorhergehenden Ansprüche,
wobei jede individuelle Funktionseinheit (300) eine Kerneinheit (330) umfasst.

8. Netzwerkteilnehmer (200) gemäß Anspruch 7,
wobei jede Kerneinheit (330) einen Registersatz (331) und/oder einen flüchtigen Datenspeicher (334) und/oder einen SyncManager (335) und/oder zweite Teile (336) einer Einheit zur Verwaltung eines verteilten Zeitsignals umfasst.

9. Netzwerkteilnehmer (200) gemäß einem der Ansprüche 7 und 8,
die Kerneinheit (330) einer ersten individuellen Funktionseinheit (300, 301) Register (332) zur Ansteuerung der ersten Schnittstelle (210) und/oder die Kerneinheit (330) einer zweiten individuellen Funktionseinheit (300, 302) Register (333) zur Ansteuerung der zweiten Schnittstelle (220) aufweist.

10. Netzwerkteilnehmer (200) gemäß einem der vorhergehenden Ansprüche,
wobei der Netzwerkteilnehmer (200) eine Management-Schnittstelle (500) zur Verwaltung der ersten Schnittstelle (210) und/oder der zweiten Schnittstelle (220) aufweist.

11. Netzwerkteilnehmer (200) gemäß Anspruch 10 und einem der Ansprüche 7 bis 9,
wobei die Management-Schnittstelle (500) nur durch eine erste individuelle Funktionseinheit (300, 301) und/oder eine zweite individuelle Funktionseinheit (300, 302) ansprechbar ist.

12. Netzwerkteilnehmer (200) gemäß einem der vorhergehenden Ansprüche,
wobei die erste Schnittstelle (210) eine erste FIFO-Warteschlange (211) aufweist
und/oder die zweite Schnittstelle (220) eine zweite FIFO-Warteschlange (221) aufweist.

13. Netzwerkteilnehmer (200) gemäß einem der vorhergehenden Ansprüche,
wobei die erste Schnittstelle (210) und die zweite Schnittstelle (220) als Ethernet-Schnittstellen ausgebildet sind.

14. Netzwerkteilnehmer (200) gemäß einem der vorhergehenden Ansprüche,
wobei der Netzwerkteilnehmer (200) als EtherCAT-Teilnehmer ausgebildet ist.

15. Netzwerkteilnehmer (200) gemäß Anspruch 14,
wobei die Anwendungsschnittstellen (310) der individuellen Funktionseinheiten (300) zum Anschluss von EtherCAT-Application-Controllern ausgebildet sind.

## Claims

1. Network subscriber (200)
having a plurality of individual functional units (300),
a number of common functional units (400),
a first interface (210) for rendering a first physical connection to adjacent network subscribers,
**characterized in that** each of the plurality of individual functional units (300) comprises an application interface (310) that provides the actual interface for connecting a slave application device to the respective individual functional unit (300), and there is provision for a second interface (220) for rendering a second physical connection to the adjacent network subscribers,
wherein a proportion of a transit time for a data packet to be routed through the network subscriber (200) that arises in the first interface (210) and in the second interface (220) for rendering a physical connection arises only once per first interface (210) and second interface (220) and routing direction.

2. Network subscriber (200) according to Claim 1, wherein the common functional units (400) are usable by all the individual functional units (300) .

3. Network subscriber (200) according to either of the preceding claims,
wherein the common functional units (400) comprise a chip interface (420) to a non-volatile data memory
and/or first portions (430) of a unit for managing a distributed time signal
and/or at least one light-emitting diode (440) and/or a clock generation unit (450) and/or a generation unit (460) for a reset signal.

4. Network subscriber (200) according to one of the preceding claims,
wherein the common functional units (400) comprise a packet processing unit (410).

5. Network subscriber (200) according to Claim 4,
wherein the packet processing unit (410) is designed to identify packet parts of a packet received by the network subscriber (200) and/or to check a checksum and/or to generate a checksum.

6. Network subscriber (200) according to one of the preceding claims,
wherein each individual functional unit (300) comprises a memory management unit (320).

7. Network subscriber (200) according to one of the preceding claims,
wherein each individual functional unit (300) comprises a core unit (330).

8. Network subscriber (200) according to Claim 7, wherein each core unit (330) comprises a register set (331) and/or a volatile data memory (334) and/or a sync manager (335) and/or second portions (336) of a unit for managing a distributed time signal.

9. Network subscriber (200) according to either of Claims 7 and 8,
wherein the core unit (330) of a first individual functional unit (300, 301) has registers (332) for actuating the first interface (210) and/or the core unit (330) of a second individual functional unit (300, 302) has registers (333) for actuating the second interface (220).

10. Network subscriber (200) according to one of the preceding claims,
wherein the network subscriber (200) has a management interface (500) for managing the first interface (210) and/or the second interface (220).

11. Network subscriber (200) according to Claim 10 and one of Claims 7 to 9,
wherein the management interface (500) is addressable only by a first individual functional unit (300, 301) and/or a second individual functional unit (300, 302).

12. Network subscriber (200) according to one of the preceding claims,
wherein the first interface (210) has a first FIFO queue (211)
and/or the second interface (220) has a second FIFO queue (221).

13. Network subscriber (200) according to one of the preceding claims,
wherein the first interface (210) and the second interface (220) are in the form of Ethernet interfaces.

14. Network subscriber (200) according to one of the preceding claims, wherein the network subscriber (200) is in the form of an EtherCAT subscriber.

15. Network subscriber (200) according to Claim 14, wherein the application interfaces (310) of the individual functional units (300) are designed for connecting EtherCAT application controllers.

## Revendications

1. Périphérique de réseau (200),
comprenant une pluralité d'unités fonctionnelles individuelles (300),
un certain nombre d'unités fonctionnelles communes (400), une première interface (210) servant à la conversion d'une première liaison physique avec les périphériques de réseau adjacents,
**caractérisé en ce que** chacune de la pluralité d'unités fonctionnelles individuelles (300) comporte une interface d'application (310) qui constitue l'interface proprement dite pour le raccordement d'un appareil d'application esclave à l'unité fonctionnelle individuelle respective (300), et une deuxième interface (220) pour la conversion d'une deuxième liaison physique avec les périphériques de réseaux adjacents est prévue, survenant une proportion d'un temps de passage pour le passage d'un paquet de données à travers le périphérique de réseau (200), survenant dans la première interface (210) et dans la deuxième interface (220) pour la conversion d'une liaison physique, seulement une fois par première interface (210) et par deuxième interface (220) et par sens de passage.

2. Périphérique de réseau (200) selon la revendication 1, les unités fonctionnelles communes (400) pouvant être utilisées par toutes les unités fonctionnelles individuelles (300).

3. Périphérique de réseau (200) selon l'une des revendications précédentes,
les unités fonctionnelles communes (400) comprenant une interface à puce (420) vers une mémoire de données non volatile
et/ou des premières parties (430) d'une unité servant à la gestion d'un signal de temps distribué
et/ou au moins une diode électroluminescente (440)
et/ou une unité génératrice d'horloge (450)
et/ou une unité génératrice (460) pour un signal de réinitialisation.

4. Périphérique de réseau (200) selon l'une des revendications précédentes, les unités fonctionnelles communes (400) comprenant une unité de traitement de paquets (410).

5. Périphérique de réseau (200) selon la revendication 4, l'unité de traitement de paquets (410) étant configurée pour reconnaître des composants de paquet d'un paquet reçu par le périphérique de réseau (200) et/ou pour contrôler une somme de contrôle et/ou pour générer une somme de contrôle.

6. Périphérique de réseau (200) selon l'une des revendications précédentes, chaque unité fonctionnelle individuelle (300) comprenant une unité de gestion de mémoire (320).

7. Périphérique de réseau (200) selon l'une des revendications précédentes, chaque unité fonctionnelle individuelle (300) comprenant une unité de noyau (330).

8. Périphérique de réseau (200) selon la revendication 7, chaque unité de noyau (330) comprenant un jeu de registres (331) et/ou une mémoire de données volatile (334) et/ou un gestionnaire de synchronisation (335) et/ou des deuxièmes parties (336) d'une unite servant à la gestion d'un signal de temps distribué.

9. Périphérique de réseau (200) selon l'une des revendications 7 et 8, l'unité de noyau (330) d'une première unité fonctionnelle individuelle (300, 301) possède des registres (332) servant à la commande de la première interface (210) et/ou l'unité de noyau (330) d'une deuxième unité fonctionnelle individuelle (300, 302) possède des registres (333) servant à la commande de la deuxième interface (220).

10. Périphérique de réseau (200) selon l'une des revendications précédentes, le périphérique de réseau (200) comprenant une interface de gestion (500) servant à la gestion de la première interface (210) et/ou de la deuxième interface (220).

11. Périphérique de réseau (200) selon la revendication 10 et l'une des revendications 7 à 9, l'interface de gestion (500) ne pouvant être sollicitée que par une première unité fonctionnelle individuelle (300, 301) et/ou une deuxième unité fonctionnelle individuelle (300, 302).

12. Périphérique de réseau (200) selon l'une des revendications précédentes, la première interface (210) possédant une première file d'attente FIFO (211) et/ou la deuxième interface (220) possédant une deuxième file d'attente FIFO (221).

13. Périphérique de réseau (200) selon l'une des revendications précédentes, la première interface (210) et la deuxième interface (220) étant réalisées sous la forme d'interfaces Ethernet.

14. Périphérique de réseau (200) selon l'une des revendications précédentes, le périphérique de réseau (200) étant réalisé sous la forme d'un périphérique EtherCAT.

15. Périphérique de réseau (200) selon la revendication 14, les interfaces d'application (310) des unités fonctionnelles individuelles (300) étant configurées pour le raccordement de contrôleurs d'application EtherCAT.
